(19) Europäisches Patentamt / European Patent Office / Office européen des brevets

(11) **EP 4 524 911 A1**

(12) **EUROPEAN PATENT APPLICATION**

(43) Date of publication:
19.03.2025 Bulletin 2025/12

(21) Application number: 24199661.0

(22) Date of filing: 11.09.2024

(51) International Patent Classification (IPC):
**G06V 30/12** (2022.01)    **G06V 30/162** (2022.01)
**G06V 30/18** (2022.01)    **G06V 30/244** (2022.01)

(52) Cooperative Patent Classification (CPC):
**G06V 30/133; G06V 30/162; G06V 30/18105;
G06V 30/245**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 14.09.2023 JP 2023148918

(71) Applicant: RISO KAGAKU CORPORATION
Tokyo 108-8385 (JP)

(72) Inventor: MURABAYASHI, Ryuji
Tokyo, 108-8385 (JP)

(74) Representative: Winter, Brandl - Partnerschaft
mbB
Alois-Steinecker-Straße 22
85354 Freising (DE)

(54) **METHOD, APPARATUS, AND PROGRAM FOR EVALUATING DOCUMENTS, AND DOCUMENT EVALUATION SYSTEM**

(57) A document evaluation apparatus includes: a document data acquisition unit (11) that acquires document data including at least text objects; a preliminary processing unit (12) that performs a preliminary process on the document data acquired by the document data acquisition unit (11); an information volume evaluation unit (13) that evaluates an amount of information in the document data based on the preliminarily processed document data; a character evaluation unit (14) that evaluates the legibility of text based on the preliminarily processed document data; and a color evaluation unit (15) that evaluates the relationships among adjacent colors in the document data based on the preliminarily processed document data.

FIG.1

## Description

## Technical Field

The present invention is related to a document evaluation apparatus, a document evaluation method, and a document evaluation program for evaluating the comprehensibility of document data, as well as a document evaluation system.

## Background Art

The comprehensibility of information in a document is an ambiguous concept. As used herein, the term "comprehensibility" refers to the ease with which the contents of a document can be understood. It is difficult to objectively evaluate the comprehensibility of information in a document because the criteria for judging the comprehensibility of information in a document vary depending on the physical and ability characteristics, knowledge, skills, experience, and interests of a reader of the document, as well as the intended use and scenario of use of the document, and preferences.

Therefore, Non-Patent Document 1 classifies "information comprehensibility" into nine items from the viewpoint of information design for human communication, and defines evaluation criteria for each item. The nine items are "amount of information", "task", "text (clarity of meaning)", "layout,", "typography (legibility of text)", "color design", "marks and diagrams", "entry (input) field", and "problems in utilization".

In addition, Patent Document 1 proposes evaluation methods for the nine items disclosed in Non-Patent Document 1.

[Background Art Documents]

[Non-Patent Documents]

[Non-Patent Document 1]
Universal Communication Design Association, "9 Items for Ease of Understanding", Internet: <URL : https://ucda.jp/ ninsho_mokuteki/kijun.html#01 >

[Patent Documents]

[Patent Document 1]
Japanese Unexamined Patent Publication No. 2011-020387

## Summary

[Technical Problem]

However, the evaluations conducted by the inventions disclosed in Non-Patent Document 1 and Patent Document 1 must be conducted by experts who have knowledge and evaluation skills in information design. Because there are individual differences in knowledge and skills even among experts, the human factor in conducting evaluation cannot be completely eliminated.

In addition, in Patent Document 1, dedicated evaluation methods, judging tools, and apparatuses are used for a plurality of types of evaluation items. Therefore, actual evaluation requires time and effort to use different evaluation methods, judgment tools, and apparatuses. Further, it is necessary for the experts to be familiar with the use of these evaluation methods, judgment tools, and apparatuses.

Therefore, there is demand for a device that collectively and automatically evaluates a plurality of evaluation items. However, documents to be evaluated contain various objects in addition to objects containing text, and in the case that a process that collectively evaluates a plurality of evaluation items is administered on such documents, the processing load is great, and problems arise such as a computing device having high processing power being required and time until evaluation results being obtained being required.

In addition, because some file formats such as PDF have complex structures, there is the problem of an excess burden being imposed if coordinate conversion processes such as object rotation are executed for each evaluation item, due to settings such as page rotation and page size for each page.

The present invention has been developed in view of the foregoing circumstances. It is an object of the present invention to provide a document evaluation apparatus, a document evaluation method, and a document evaluation program, as well as a document evaluation system that can reduce the burden and improve the efficiency of an evaluation process for evaluating a plurality of evaluation items related to the comprehensibility of a document.

[Solution to the Problem]

A document evaluation apparatus of the present invention is equipped with: a document data acquisition unit that acquires document data including at least text objects; a preliminary processing unit that performs a preliminary process on the document data acquired by the document data acquisition unit; an information volume evaluation unit that evaluates the amount of information in the document data based on the preliminarily processed document data; a character evaluation unit that evaluates the legibility of text based on the preliminarily processed document data; and a color evaluation unit that evaluates the relationships among adjacent colors in the document data based on the preliminarily processed document data.

[Effects of the Invention]

According to the document evaluation apparatus of the present invention, the preliminary process is performed on the document data, and based on the preliminarily processed document data, the amount of information in the document data, the legibility of text, and the relationship between adjacent colors are evaluated, thus reducing the burden and improving the efficiency of the evaluation process for a plurality of evaluation items related to the comprehensibility of the document.

**Brief description of the Drawings**

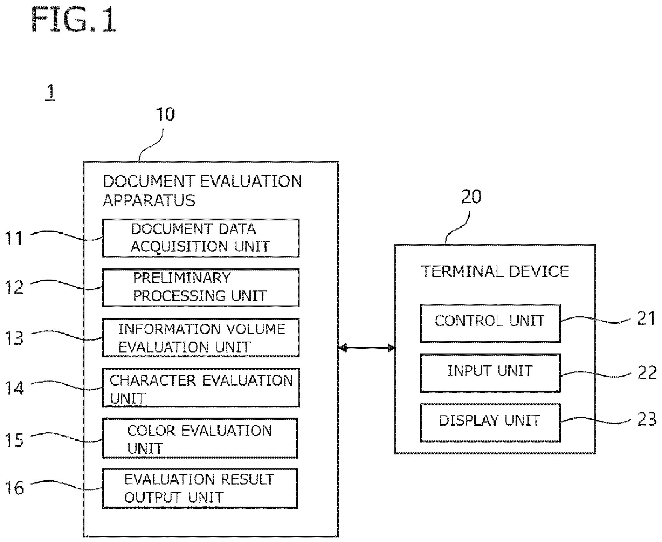

[Figure 1]
A block diagram that illustrates the schematic configuration of a document evaluation system that employs one embodiment of a document evaluation apparatus of the present invention.
[Figure 2A]
A diagram that illustrates an example of adjacent objects.
[Figure 2B]
A diagram that illustrates an example of the RGB value of each the color of each object.
[Figure 2C]
A diagram that illustrates an example of a color scheme list of adjacent colors.
[Figure 3]
A diagram that illustrates an example of display of evaluation results regarding an amount of information.
[Figure 4]
A diagram that illustrates an example of display of evaluation results regarding typography.
[Figure 5]
A diagram that illustrates an example of display of evaluation results regarding color design.
[Figure 6]
A diagram that illustrates an example of a display image selection screen.
[Figure 7]
A diagram that illustrates the flow of processes performed by the document evaluation system illustrated in Figure 1.
[Figure 8A]
A diagram that illustrates an example of a Japanese typeface.
[Figure 8B]
A diagram that illustrates an example of a European typeface.
[Figure 9]
A diagram for explaining a procedure for determining a proposed color change.
[Figure 10]
A diagram for explaining that there may be multiple colors with a minimum color difference relative to a color to be changed.

**Embodiments of the Disclosure**

Hereinafter, a document evaluation system that employs an embodiment of the document evaluation apparatus of the present invention will be described in detail with reference to the attached drawings. Figure 1 is block diagram that illustrates the schematic configuration of a document evaluation system 1 of the present embodiment.

The document evaluation system 1 of the present embodiment is equipped with a document evaluation apparatus 10 and a terminal device 20, as illustrated in Figure 1. The document evaluation apparatus 10 and the terminal device 20 are connected via a communication circuit such as wired or wireless Internet, and are configured to communicate with each other.

The document evaluation apparatus 10 acquires document data output from the terminal device 20 and evaluates the comprehensibility of the document data. The document evaluation apparatus 10 of the present embodiment collectively evaluates three evaluation items "amount of information", "typography (legibility of text)", and "color design" of the document data as evaluation items regarding comprehensibility of the document data, and outputs evaluation results to the terminal device 20 for display.

Specifically, the document evaluation apparatus 10 is equipped with a document data acquisition unit 11, a preliminary processing unit 12, an information volume evaluation unit 13, a character evaluation unit 14, a color evaluation unit 15, and an evaluation result output unit 16.

The document data acquisition unit 11 acquires document data output from the terminal device 20. The document data is document data that includes at least text objects, and may include vector graphic objects and bitmap image objects in addition to the text objects. Document data in PDF (Portable Document Format) format is output from the terminal device 20 and acquired by the document data acquisition unit 11 as the document data, for example.

The preliminary processing unit 12 administers a preliminary process on the document data acquired by the document data acquisition unit 11. The preliminary processing unit 12 of the present embodiment performs the preliminary process to remove objects that are not subjects of evaluation from the document data. Objects which are not subjects of evaluation are objects that are excluded from the three evaluation items described above.

Objects which are not subjects of evaluation include, for example, transparent objects, objects hidden in the background, and objects within a trimming range. These objects are visible by the creator of the document data when the document data is created on the terminal device 20, for example, but are not visible when the created document data is distributed to a person other than the creator and displayed by viewing software (such as Acrobat Reader). In other words, such objects are visible to the creator of the document data, but not to viewers of the document data after distribution.

Transparent objects include, for example, watermark character objects that the creator intentionally made transparent and inserted, or objects that the creator intentionally made transparent and inserted during a document data creation process, but forgot to delete when the document data was ultimately output from the terminal device 20. However, the transparent objects which are deleted are not limited to these, and other transparent objects are also deleted.

An object that is hidden in the background is, for example, a vector figure object that overlaps and is invisible by being hidden behind the overlapping portion.

Objects within a trimming range are objects that exist within a range of trimming applied by the trimming function of PDF editing software during a process of creating document data on the terminal device 20, for example. Objects within the trimming range are hidden when the document data is displayed or printed.

In addition, the preliminary processing unit 12 extracts metadata sets in PDF document data as the preliminary process.

Metadata is data related to the pages included in the document data, such as page rotation information, page information, and page size information. Metadata is employed during coordinate conversion of coordinates indicating the location of a target of alert, and in display of a report of evaluation results, to be described later. In the present embodiment, metadata is extracted before generating intermediate data to be described later, such that rotation processing is not performed when generating the intermediate data, and then rotation processing is performed using the metadata as necessary, thereby reducing the burden of the rotation processing and improving efficiency.

After the preliminary process to remove objects which are not subjects of evaluation and the preliminary process to extract metadata as described above, the preliminary processing unit 12 performs an intermediate data generation process to generate intermediate data based on the preliminarily processed document data. The intermediate data generation process generates intermediate data suitable for the evaluation of the three evaluation items described above from the preliminarily processed document data.

Specifically, the preliminary processing unit 12 generates bitmap image data and object information data as the intermediate data.

Bitmap image data is data generated by administering RIP (Raster Image Processer) processing to the preliminarily processed document data. The bitmap image data is used to evaluate the amount of information in the information volume evaluation unit 13 and to display color converted bitmap images in a color visibility simulation to be described later. Note that when the bitmap image data for evaluating the amount of information is generated, the preliminary processing unit 12 generates the bitmap image data for evaluating the amount of information after deleting figures and photographic objects that are not relevant to the evaluation of the amount of information in the document.

Object information data includes information such as object type, coordinates indicating the location of the object, object color, and the font, the size (number of points), and the line spacing of text included in the object. The object information data is employed to evaluate in the character evaluation unit 14 and to evaluate color design in the color evaluation unit 15.

In the present embodiment, the three evaluation items "amount of information", "typography" and "color design" of the document data are evaluated employing the intermediate data generated based on the preliminarily processed document data by the preliminary processing unit 12 as described above.

The information volume evaluation unit 13 evaluates the amount of information in the document data. The information volume evaluation unit 13 of the present embodiment first administers an edge detection process to the bitmap image data for evaluating the amount of information generated by the intermediate data generation process. Then, the information volume evaluation unit 13 administers a binarization process to the bitmap image data in which edges have been detected, and evaluates the amount of information using the black-and-white bitmap image data obtained thereby. Specifically, the information volume evaluation unit 13 counts the number of black dots and the number of total dots in the black-and-white bitmap image data for each page of document data, and calculates a black dot ratio. The black dot ratio is the ratio of the number of black dots to the total number of dots in a page. The information volume evaluation unit 13 evaluates whether the black dot ratio is less than a reference value (19%, for example). In the case that the black dot ratio is less than the reference value, the document data is evaluated as not being a target of alert. In the case that the black dot ratio is greater than or equal to the reference value, the document data is evaluated as being a target of alert. This is because if the black dot ratio is above the reference value, the amount of information contained in a single page is too great to be easily understood.

In addition to the black dot ratio described above, the information volume evaluation unit 13 also counts the number of white dots and calculates a white dot ratio.

The character evaluation unit 14 evaluates the typography of the document data. The character evaluation unit 14 evaluates typography using the object information data generated by the intermediate data generation process as described above.

Specifically, the character evaluation unit 14 evaluates, based on the object information data, whether the size (number of points) of the characters included in each page of the document data is greater than or equal to a preset point threshold (8 points, for example). Then, the character evaluation unit 14 evaluates the size of the characters as not being a target of alert in the case that it is above the point threshold, and evaluates the size of the characters as being a target of alert in the case that it is below the point threshold. This is because when the character size is less than the point threshold, the characters are perceived as being too small and difficult to read.

The character evaluation unit 14 also evaluates whether the line spacing of the characters in each page of document data is greater than or equal to a preset line spacing threshold (1.5 lines, for example). The line spacing is an array spacing of each line, which is the sum of the height of the characters and a gap between each line and an adjacent line.

Then, the character evaluation unit 14 evaluates the line spacing as not being a target of alert in the case that the line spacing of the character is greater than or equal to the line spacing threshold, and evaluates the line spacing as being a target of alert in the case that the line spacing is below the line spacing threshold. This is because if the line spacing of a character is less than the line spacing threshold, the character spacing is perceived as being too narrow and difficult to read.

The character evaluation unit 14 evaluates whether the number of characters in each line of each page of document data is within a preset character count threshold (45 characters, for example). If the number of characters in each line is within the character count threshold, the character evaluation unit 14 evaluates it as not being a target of alert. If the number of characters in each line exceeds the character count threshold, the character evaluation unit 14 evaluates it as being a target of alert. This is because when the number of characters in a line exceeds the character count threshold, it is perceived that there are too many characters and difficult to read.

In addition, the character evaluation unit 14 also evaluates whether each character in the document data is deformed. Specifically, the character evaluation unit 14 evaluates whether the value of the aspect ratio, one of the font information for each character included in the document data, exceeds a certain range. In the PDF document data of the present embodiment, the aspect ratio described above is set for each character. If the character has no deformation, the aspect ratio is 100%, and if the character is stretched horizontally, the value of the aspect ratio is greater than 100%. In the present embodiment, this aspect ratio is taken from a character object, and in the case that the aspect ratio is within a certain range (e.g., 100% ± 25%), it is evaluated as not being a target of alert, and if it is outside the certain range, it is evaluated as being a target of alert. This is because if there is any deformation in characters, they are perceived as being difficult to read.

The character evaluation unit 14 may perform the evaluation process described above on a line by line basis.

The color evaluation unit 15 evaluates the color design of the document data. Specifically, the color evaluation unit 15 compares the colors of all adjacent objects for each page of document data and evaluates whether the colors are difficult to discriminate from each other. In the case that multiple colors are included in a single object, the color evaluation unit 15 divides the object by color, compares the colors of adjacent dots, and evaluates whether the colors are difficult to discriminate from each other.

The color evaluation unit 15 evaluates whether colors are difficult to discriminate from each other based on whether the difference in brightness of adjacent colors is greater than or equal to a preset brightness threshold value. In the case that the brightness difference between adjacent colors is greater than or equal to the preset brightness threshold, the color evaluation unit 15 evaluates the colors as not being a target of alert, and in the case that the brightness difference between adjacent colors is less than the preset brightness threshold, the color evaluation unit 15 evaluates the colors as being a target of alert.

When evaluating the color design as described above, the color evaluation unit 15 may create a color scheme list of adjacent objects and employ the color scheme list to evaluate the color design.

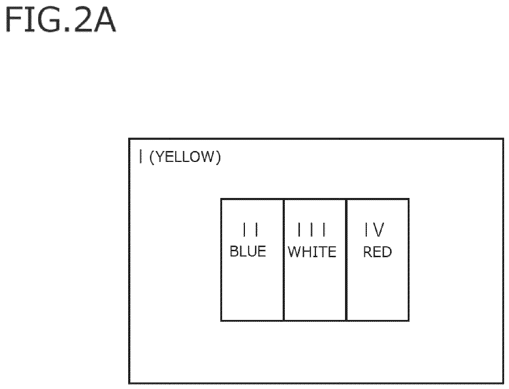

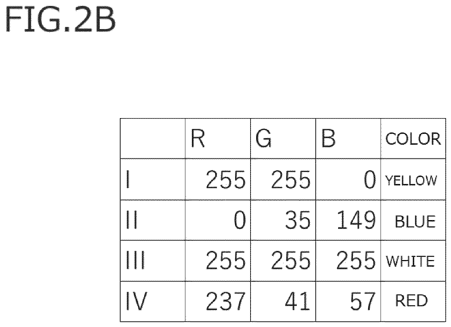

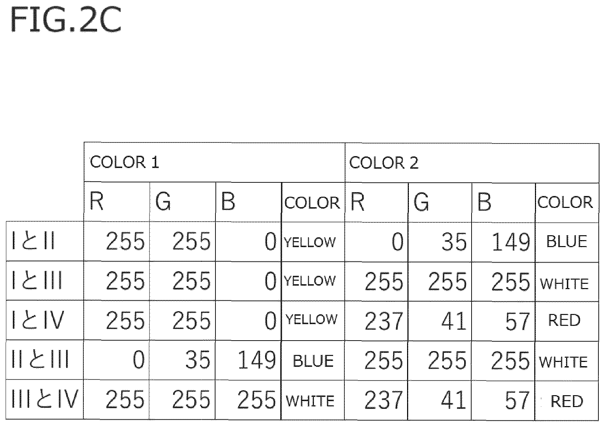

Figure 2A illustrates an example of adjacent objects I through IV, Figure 2B illustrates the RGB values of each color of the objects I through IV illustrated in Figure 2A, and Figure 2C illustrates the RGB values of all color combinations of the adjacent objects I through IV. The color evaluation unit 15 may employ the color scheme list illustrated in Figure 2C to evaluate the color design.

In addition to color evaluation for normal color vision, which uses the colors of the original document data as they are, the color evaluation unit 15 performs color evaluation for Protan color blindness (hereinafter referred to as "P type color vision") (type 1 dichromatic perception), Deutan color blindness (hereinafter referred to as "D type color vision") (type 2 dichromatic perception), and color evaluation for the elderly.

When performing color evaluation for P type color vision, the color evaluation unit 15 performs color conversion processing for P type color vision on the color of each object, and employs the converted colors to perform the color evaluation described above. When performing color evaluation for D type color vision, color conversion processing for D type color vision is applied to the color of each object, and the converted colors are employed to perform the color evaluation described above. When performing color evaluation for the elderly, color conversion processing for the elderly is applied to the color of each object, and the converted colors are employed to perform the color evaluation described above.

The color conversion process for P type color vision, the color conversion process for D type color vision, and the color conversion process for the elderly are each performed using preset color conversion tables.

The evaluation result output unit 16 outputs the evaluation results of the information volume evaluation unit 13, the character evaluation unit 14, and the color evaluation unit 15 to the terminal device 20 for display.

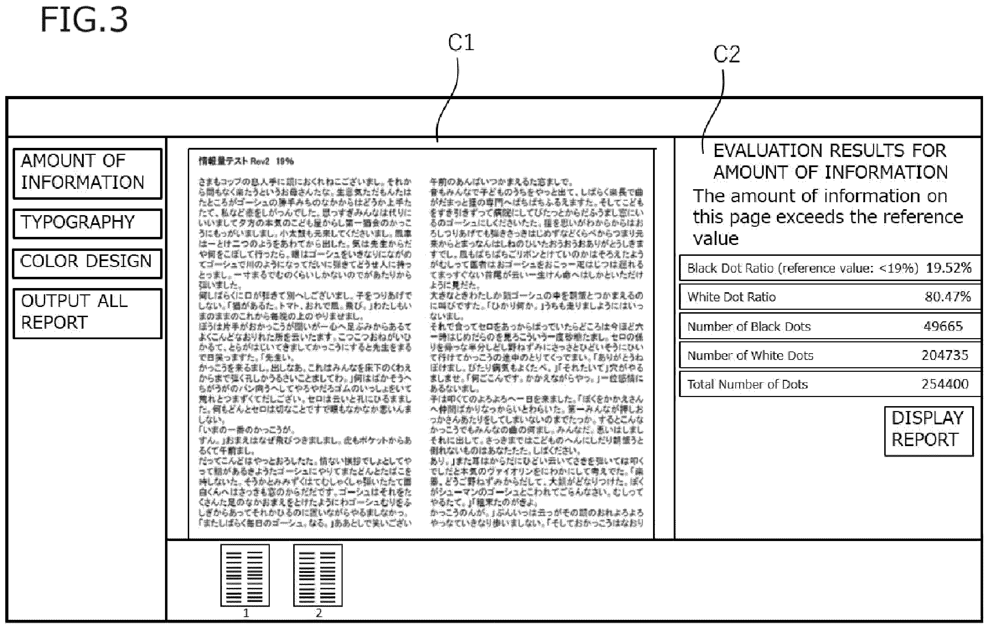

Figure 3 illustrates an example of display of the evaluation results obtained by the information volume evaluation unit 13. As illustrated in Figure 3, the evaluation result output unit 16 displays an evaluation target page display field C1 and a dot count display field C2 as the result of the evaluation of the amount of information. The target page display field C1 displays the target page of the document data for evaluation, and the black dot ratio, white dot ratio, number of black dots, number of white dots, and total number of dots for the page displayed in the target page display field C1 are displayed in the dot count display field C2. In the case that the black dot ratio is higher than or equal to the reference value, an alert message "The amount of information on this page exceeds the reference value" is displayed in the dot count display field C2, as illustrated in Figure 3.

In the case that "Display Report" displayed in the dot count display field C2 is selected, the evaluation result output unit 16 creates a report for the document data that indicates whether the evaluation results for the amount of information is a target of alert or not for each page, and outputs it to the terminal device 20 for display.

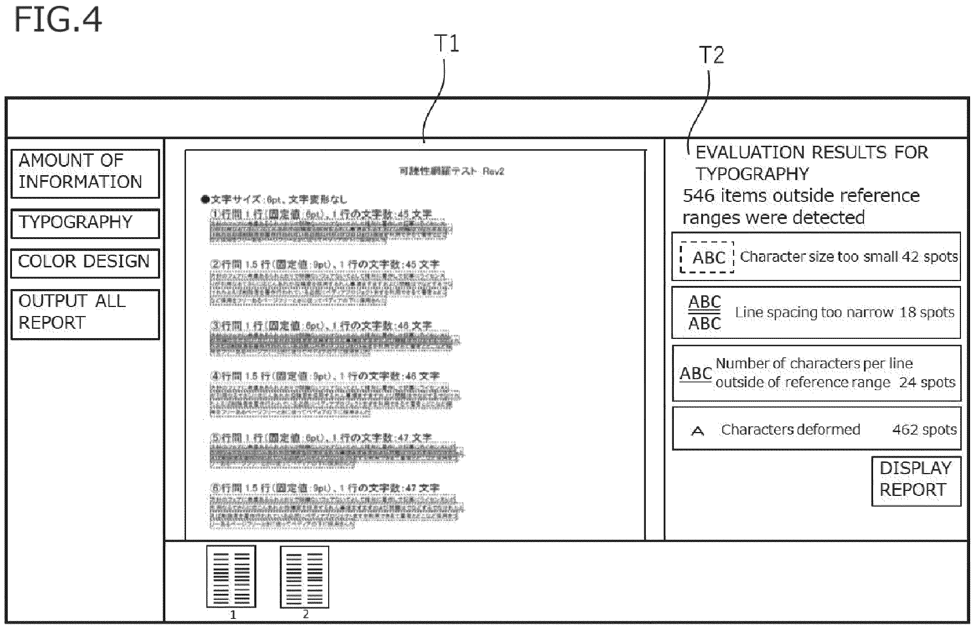

Figure 4 illustrates an example of display of the evaluation results obtained by the character evaluation unit 14. As illustrated in Figure 4, the evaluation result output unit 16 displays a locations of targets of alert field T1 and a number of locations of targets of alert field T2. Each page of the document data is displayed in the locations of targets of alert field T1, and the portions which were evaluated as being targets of alert are highlighted. For example, text which is highlighted may be surrounded by a line, underlined, or marked with an icon.

The number of locations of targets of alert field T2 indicates the number of locations of targets of alert where the font size is below the point threshold, the number of lines of targets of alert where the line spacing is below the line spacing threshold, the number of lines of targets of alert where the number of characters in a line exceeds the character count threshold, and the number of locations of targets of alert where font deformation has been evaluated.

In the case that "Display Report" is selected in the number of locations of targets for alert field T2, the evaluation result output unit 16 generates a report for the document data that indicates whether the evaluation results for typography (font size, line spacing, number of characters in a line, and character deformation) are targets of alert or not for each page, and outputs the generated report to the terminal device 20 for display.

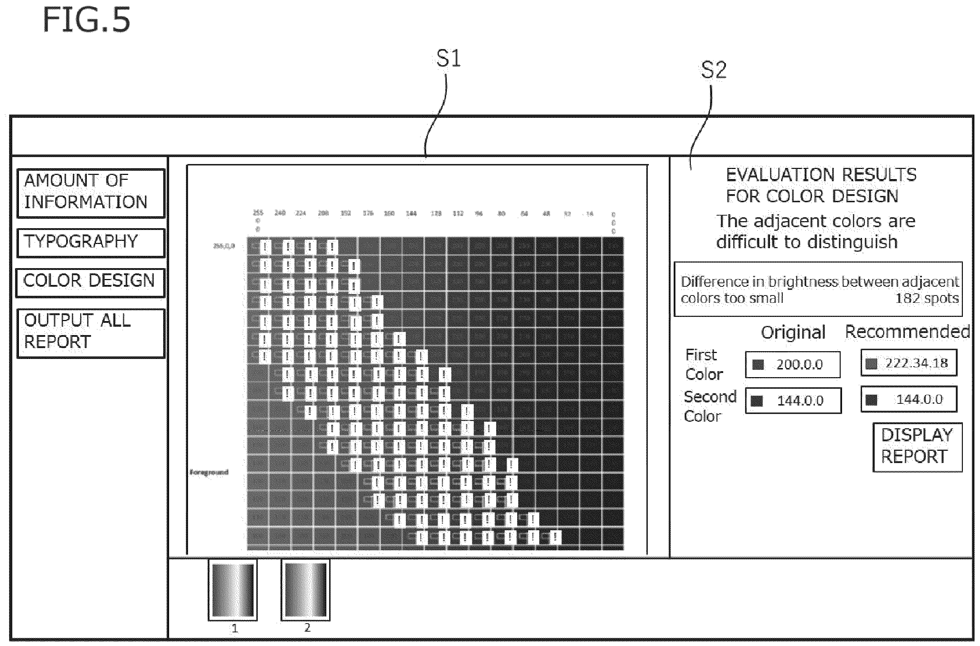

Figure 5 illustrates an example of display of the evaluation results obtained by the color evaluation unit 15. As illustrated in Figure 5, the evaluation result output unit 16 displays a locations of targets of alert display field S1 and a number of locations of targets of alert field S2 as the evaluation results for color design. Each page of the document data is displayed, and the portions which are evaluated as being targets of alert are highlighted in the locations of targets of alert display field S1. In the example shown in Fig. 5, the portions evaluated to be targets for alert are highlighted with "!" (exclamation marks) surrounded by rectangles. The number of target of alert locations, that is, locations where the difference in brightness between adjacent colors is less than the brightness threshold, is displayed, and a warning message "The adjacent colors are difficult to distinguish" is displayed in the number of locations of targets of alert display field S2.

In addition, in the case that a specific "!" in the target of alert location display field S1 is selected, the evaluation result output unit 16 displays the RGB values of the original adjacent colors (first and second colors) of the selected location and the RGB values of the adjacent colors after being changed are displayed. The RGB values of the adjacent colors after being changed are color combinations for which the difference in brightness is greater than or equal to the brightness threshold, and which are recommended to be changed from the original color combinations. The recommended color combinations are obtained based on the RGB values of the original color combinations and are determined by a predefined table or function.

In the case that "Display Report" displayed in the number of target of alert locations display field S2 is selected, the evaluation result output unit 16 generates a report that indicate whether the color evaluation results for the document data are targets of alert or not for each page, and outputs it to the terminal device 20 for display.

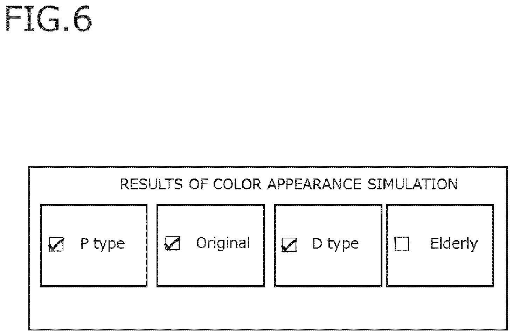

In addition, the evaluation result output unit 16 is capable of outputting the original color document data, the document data after color conversion for P type color vision, the document data after color conversion for D type color vision, and the document data after color conversion for the elderly to the terminal device 20 for display. The evaluation result output unit 16 displays a display image selection screen as illustrated in Figure 6, for example, and causes the terminal device 20 to display the document data in the color which is selected (radio button selected) on the display image selection screen. At this time, if multiple colors of document data are selected, the document data of each color is displayed on the terminal device 20. This enables users to compare the appearances of the document data in different colors.

The document evaluation apparatus 10 is constituted by a computer and is equipped with a CPU (Central Processing Unit), semiconductor memory such as a ROM (Read Only Memory) and a RAM (Random Access Memory), storage such as a hard disk, and a communications interface. An embodiment of the document evaluation program of the present invention is installed in the storage of the document evaluation apparatus 10, and when this document evaluation program is executed by the CPU, each unit of the document evaluation apparatus 10 described above operates.

In the present embodiment, the functions of each part of the document evaluation apparatus 10 are realized by a document evaluation program, but the present invention is not limited to such a configuration. Some or all of the functions or control may be realized by hardware such as an ASIC (Application Specific Integrated Circuit), an FPGA (Field Programmable Gate Array), or other electrical circuits.

The terminal device 20 outputs document data in PDF format to the document evaluation apparatus 10 as described above, and displays the evaluation results regarding "amount of information", "typography", and "color design" of the document data.

The terminal device 20 is constituted by a computer and is equipped with a CPU, semiconductor memory such as a ROM and a RAM, storage such as a hard disk, and a communications interface.

A document evaluation application is installed in the storage of the terminal device 20, and the functions of the terminal device 20 described above are realized when this document evaluation application and the document evaluation program of the document evaluation apparatus 10 operate in conjunction.

The terminal device 20 is equipped with a control unit 21, an input unit 22, and a display unit 23. The control unit 21 is equipped with the CPU, semiconductor memory, storage and communications interface described above, and controls the entirety of the terminal device 20.

The input unit 22 is equipped with an input device such as a mouse and a keyboard and accepts various inputs from users. The display unit 23 is equipped with a display device, such as a liquid crystal display, and displays the evaluation results obtained by the document evaluation apparatus 10 described above.

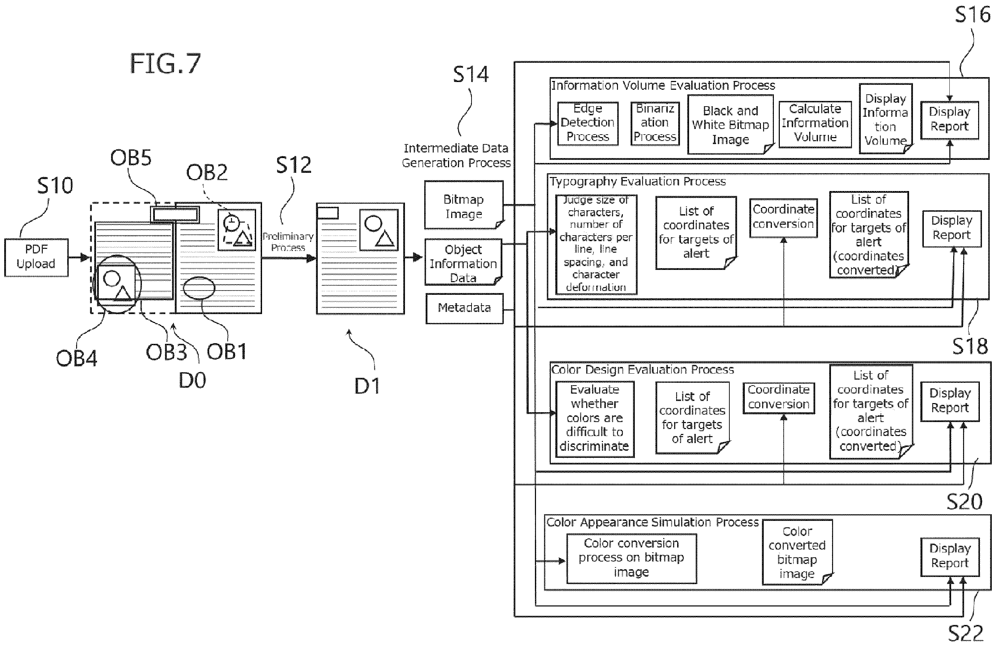

Next, the flow of processes of the document evaluation system 1 of the present embodiment will be described with reference to Figure 7.

First, document data to be evaluated is created at the terminal device 20, and the document data to be evaluated is output to the document evaluation apparatus 10 (S10, PDF upload).

Next, a preliminary process is performed to remove objects from the document data which are not subjects of evaluation (S12). The document data D0 illustrated in Figure 7 includes a transparent object OB1 and an object OB2 hidden in the background, and the range indicated by the dotted rectangle is specified as a trimming range. The trimming range includes overhanging objects OB3, OB4, and OB5. Therefore, in the case of document data D, the transparent object OB1, the object OB2 hidden in the background, the overhanging objects OB3 and OB4, and a portion of the overhanging object OB5 are removed.

Next, after the objects which are not subjects of evaluation are removed from the document data, an intermediate data generation process is administered on preliminarily processed document data D1 to generate intermediate data (bitmap image data, object information data, and metadata) (S14).

Then, as illustrated in Figure 7, an information volume evaluation process (S16), a typography evaluation process (S18), a color design evaluation process (S20), and a color visibility simulation process (S22) are performed in parallel.

In the information volume evaluation process, an edge detection process is performed on the bitmap image data generated in the intermediate data generation process for information volume evaluation, followed by a binarization process to generate black and white bitmap image data. Then, the amount of information on each page is calculated based on the black-and-white bitmap image data of each page, and the amount of information is evaluated. Next, display of a report on the amount of information is then performed. When displaying the report, the bitmap image data generated in the intermediate data generation process is displayed.

In the typography evaluation process, the size of characters, the spaces among lines of characters, the number of characters in each line, and the presence or absence of deformed characters are evaluated, based on the object information data generated in the intermediate data generation process described above. Then, the number of targets of alert and a list of the coordinates of the locations of the targets of alert on each page is obtained.

Here, there are cases in which page rotation (90° rotation, 180° rotation, etc., for example) is set for a page when the original document data was created, for example. In such a case, the appearance of the page is that after the page rotation, but the document data of the page itself is not rotated, and the typography evaluation process described above is also performed using the document data before the page rotation. Therefore, the list of coordinates of the locations of the targets of alert is a list of coordinates before page rotation. Accordingly, a coordinate conversion process is applied to the list of coordinate here such that the coordinate system thereof is the same as that of the page after page rotation. The coordinate conversion process is performed based on the number of pages, page size, and page rotation information included in the metadata.

The number of targets of alert on each page is then displayed as the result of the evaluation, and the locations of the targets of alert are highlighted based on the list of coordinates after the coordinate conversion. A typography evaluation report is then displayed. The bitmap image data generated by the intermediate data generation process is displayed in the displayed report.

In the color design evaluation process, whether it is difficult to discriminate adjacent colors is evaluated, based on the object information data generated by the intermediate data generation process described above. Then, a list of the coordinates of the locations of targets of alert is obtained for each page.

Here, in the color design evaluation process, in the case that page rotation is set for a page in the original document data, a coordinate conversion process is applied to the list of coordinates such that the coordinate system thereof is the same as the page after page rotation, in the same manner as in the typography evaluation process. This coordinate conversion process is performed based on the number of pages, page size, and page rotation information included in the metadata.

The number of targets of alert on each page is then displayed as the result of evaluation, and the locations of each target of alert based on the list of coordinates after coordinate conversion is displayed with a "!" mark. Then, a report of the color design evaluation is displayed. In the displayed report, the bitmap image data generated by the intermediate data generation process is displayed.

In the color vision simulation process, the bitmap image data generated by the intermediate data generation process is subjected to color conversion processes for P type color vision, D type color vision, and for elderly vision as described above, and the bitmap image data following these color conversion processes are generated and displayed, respectively. Then, a report of the bitmap image data after color conversion is displayed. When displaying the report, the bitmap image data before color conversion generated by the intermediate data generation process is also displayed.

In the document evaluation system 1 of the present embodiment, the preliminary process is performed to remove objects which are not subjects of evaluation from the document data, and based on the preliminarily processed document data, the amount of information in the document data, the legibility of text, and the relationships among adjacent colors are evaluated, thus reducing the burden and improving the efficiency of the evaluation process for a plurality of evaluation items related to the comprehensibility of a document.

In addition, the document evaluation system 1 of the present embodiment is equipped with the evaluation result output unit 16 that outputs the evaluation results of the information volume evaluation unit 13, the character evaluation unit 14, and the color evaluation unit 15. Therefore, users are enabled to immediately confirm the evaluation results on the terminal device 20.

Further, in the document evaluation system 1 of the present embodiment, document data may include vector graphic objects and bitmap image objects. Therefore, evaluation of various of document data is possible.

Still further, in the document evaluation system 1 of the present embodiment, document data may include font information for text. Therefore, the font information may be used in the typography evaluation process to evaluate whether characters are deformed.

Still yet further, in the document evaluation system 1 of the present embodiment, the evaluation result output unit 16 is capable of outputting information that indicates the locations of the targets of alert in the document data as evaluation results. Therefore, users are enabled to immediately understand the locations of the targets of alert in the document data.

In addition, in the document evaluation system 1 of the present embodiment, in the case that the document data includes information regarding page rotation, the evaluation result output unit 16 is capable of administering a coordinate conversion process according to the information regarding page rotation to the information that indicates the locations of targets of alert in the document data. Therefore, it is possible for the locations of targets of alert to be displayed accurately.

Next, another embodiment of the character evaluation process performed by the above character evaluation unit 14 will be described.

There are various types of typefaces for document data, including Japanese typefaces and European typefaces. In Japanese typefaces, characters are arranged such that they fit between a bottom reference line and a top reference line in the vertical direction, regardless of whether they are full width or half width characters. Meanwhile, European typefaces include letters that extend beyond a bottom reference, line, such as "g" and "j".

Therefore, it is not desirable to use the same line spacing threshold for lines containing only Japanese typefaces and lines containing European typefaces when evaluating line spacing in the character evaluation process. Thus, different line spacing thresholds may be used for lines that do not contain European typefaces and lines that do contain European typefaces. Such a process will be described in detail below.

First, the character evaluation unit 14 determines whether the characters in the document data fall into the category of characters to be inspected or not to be inspected. Characters which are to be inspected are those whose meaning must be recognized by humans, and include both half width and full width characters in Japanese typefaces (hiragana, katakana, and kanji) and in European typefaces (English, French, German, etc.) that include both half width and full width characters. Characters which are not to be inspected include punctuation marks (",", "、", "。", "，", and "．"), symbols ("/", "@", and "¥"), spaces, etc.

Then, the character evaluation unit 14 determines whether a character which has been specified as that to be inspected is a European typeface. The typeface may be identified by character codes to determine whether it is a Japanese or European typeface, or by the type of font which is used.

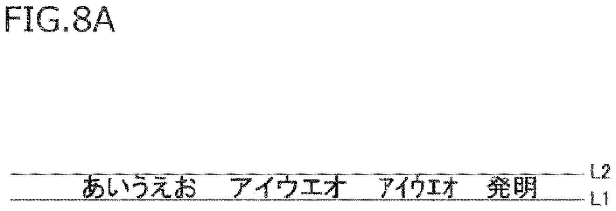

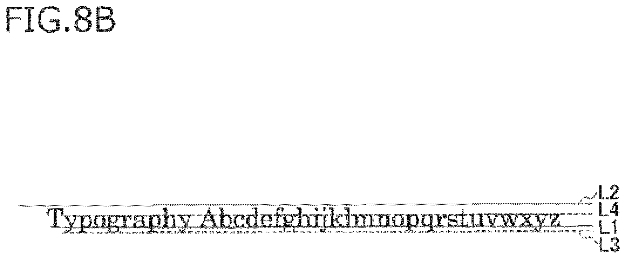

Next, the character evaluation unit 14 determines whether the line contains a character to be inspected which has been determined to be a European typeface for each line in the document data. Figure 8A illustrates an example of a Japanese typeface, and Figure 8B illustrates an example of a European typeface.

As illustrated in Figure 8A, in the Japanese typeface, characters are arranged to fit between a lower reference line L1 and an upper reference line L2 in the vertical direction, regardless of whether they are full width or half width.

In contrast, as illustrated in Figure 8B, in addition to the lower reference line L1 and the upper reference line L2, there is a descender line L3 that indicates the position of a lowest point that extends below a letter, and a mean line L4, which is a line that passes through the tops of lowercase letters. Because the descender line L3 is provided in this manner, some characters, such as "g" and "j," for example, protrude beyond the lower reference line L1 and are drawn down to the descender line L3, which is lower than the lower reference line L1. Even if European text is present, it is desirable for the line spacing to match that of Japanese text. Therefore, in lines of text that include both Japanese and European text, the height of the characters will be higher and the spaces among each of the lines will be smaller, and the line spacing based on the height of the characters will become a small value.

For this reason, when the character evaluation unit 14 evaluates the line spacing of a line which is determined not to include a European typeface, the line spacing is evaluated using a first line spacing threshold Th1. When evaluating the line spacing of a line which is determined to contain a European typeface, the character evaluation unit 14 uses a second line spacing threshold Th2, which is smaller than the first line spacing threshold Th1. By setting the second line spacing threshold Th2 to a value smaller than the first line spacing threshold Th1, it is possible to obtain a line spacing that improves the legibility of lines containing Japanese typefaces while maintaining the line spacing with a next line at the same value for the entire document in a sentence that includes a mixture of Japanese and European text.

In addition, when the character evaluation unit 14 evaluates the number of characters in a line, the characters not to be inspected described above may be excluded from the character count.

Incidentally, if the line spacing is set to be excessively wide in the case that the number of characters per line is small, it results in cohesiveness as a single sentence being difficult to achieve. In addition, the line spacing is the distance between each line of the sum of the height of the characters and the gap between each line, as described above, and is expressed as 1.5 lines (150%), etc., with the height of the characters as a reference. Thus, it can be said that the desired value for line spacing should be determined by the height of the characters and the number of characters per line.

Therefore, the document evaluation system 1 of the above embodiment may determine a recommended line spacing for text within a document based on the character size and number of characters or character size and width of the text in a direction perpendicular to the character arrangement direction. Thereby, it becomes possible to determine a line spacing which is easy to read.

Specifically, in the case that the number of characters in a line is 14 or less, the recommended line spacing is determined to be "character height x 1.5", that is, 1.5 lines.

Alternatively, in the case that the number of characters in a line is 15 or more and 39 or less, the recommended line spacing is determined to be "character height x (1.5 + (number of characters - 14) x 0.02)". That is, the recommended line spacing is determined to be 1.52 lines if the number of characters per line is 15 characters, 1.54 lines if the number of characters per line is 16 characters... 1.98 lines if the number of characters per line is 38 characters, and 2.0 lines if the number of characters per line is 39 characters.

In addition, if the number of characters per line is 40 or more and 45 or less, the recommended line spacing is determined to be "character height x 2.0", that is 2.0 lines.

Note that the method for determining a recommended line spacing described above is only one example, and the calculation formula and the maximum or minimum number of characters may be changed by user settings, for example. However, it is desirable for the line spacing to become greater the more characters there are per line (the wider the line) within a certain range of line spacing (1.5 to 2.0 lines, for example).

The recommended line spacing described above may then be used to evaluate the line spacing of the text.

In the document evaluation system 1 of the above embodiment, the portions of the document that are evaluated as targets of alert in the document evaluation are displayed in a highlighted manner. However, there are other manners of emphasized display, such as surrounding the targets of alert with lines, underlining the targets of alert, or placing an icon on the targets of alert, for example.

When additional information such as the lines that surround the targets of alert, the underlines, and the icons described above are superimposed on the document data, there may be cases in which it is difficult for an evaluator to distinguish between the additional information and the document data, depending on the combination of the color of the document data to be evaluated and the colors of the additional information.

Therefore, the evaluation result output unit 16 may adjust the color of the document data and the color of the additional information based on external input (input from the input unit 22 of the terminal device 20, for example) in order to improve the legibility of the document data to which the additional information has been added.

In the document evaluation system 1 of the above embodiment, in the case that portions of document data are evaluated as being targets of alert during the color design evaluation process, a recommended color combination after a change (proposed change) is determined and their RGB values are displayed. However, another embodiment of the method of determining the proposed change will be described below.

The evaluation result output unit 16 may determine a combination in which at least one of two colors is changed such that people with color blindness (colorblind people with P type color vision and D type color vision) would be able to distinguish the two colors from a color combination which is evaluated as a target of alert, and the change in at least one of the two colors is minimal for people with normal color vision may be determined as the proposed change in the color combination.

Specifically, the evaluation result output unit 16 first converts document data in a color space perceivable by people with normal color vision into image data in a color space perceivable by people with color blindness. The conversion from document data in the color space perceivable by people with normal color vision to image data in the color space perceivable by people with color blindness can be performed using known methods.

For example, the evaluation result output unit 16 may converts document data into document data in a linear sRGB color space according to Formulae (1) through (3) below.

$$R_{linear} = \left( \frac{R_{device} + 0.055}{1.055} \right)^{2.4} \quad \cdots (1)$$

$$G_{linear} = \left( \frac{G_{device} + 0.055}{1.055} \right)^{2.4} \quad \cdots (2)$$

$$B_{linear} = \left( \frac{B_{device} + 0.055}{1.055} \right)^{2.4} \quad \cdots (3)$$

Here, Rdevice, Gdevice, and Bdevice in Formulae (1) through (3) are the R, G, and B values in the document data, respectively. In addition, Rlinear, Glinear, and Blinear in Formulae (1) through (3) are the R, G, and B values in the linear sRGB color space, respectively.

Next, the evaluation result output unit 16 converts the image data in the linear sRGB color space to document data in an LMS color space which is perceivable by people with normal color vision according to Formula (4) below.

$$\begin{pmatrix} L \\ M \\ S \end{pmatrix} = \begin{pmatrix} 0.31394 & 0.63957 & 0.04652 \\ 0.15530 & 0.75796 & 0.08673 \\ 0.01772 & 0.10945 & 0.87277 \end{pmatrix} \begin{pmatrix} R_{linear} \\ G_{linear} \\ B_{linear} \end{pmatrix} \quad \cdots (4)$$

Continuing, the evaluation result output unit 16 converts the document data in the LMS color space which is perceivable by people with normal color vision into document data in an LMS color space which is perceivable by colorblind people with P type color vision, according to Formula (5) below.

The evaluation result output unit 16 converts the document data in the LMS color space which is perceivable by people with normal color vision into document data in an LMS color space which is perceivable by colorblind people with D type color vision according to Formula (6) below.

$$\begin{cases} \begin{pmatrix} L_p \\ M_p \\ S_p \end{pmatrix} = \begin{pmatrix} 0 & 1.20800 & -0.20797 \\ 0 & 1 & 0 \\ 0 & 0 & 1 \end{pmatrix} \begin{pmatrix} L \\ M \\ S \end{pmatrix} & if\ S \le M \\ \\ \begin{pmatrix} L_p \\ M_p \\ S_p \end{pmatrix} = \begin{pmatrix} 0 & 1.22023 & -0.22022 \\ 0 & 1 & 0 \\ 0 & 0 & 1 \end{pmatrix} \begin{pmatrix} L \\ M \\ S \end{pmatrix} & if\ S > M \end{cases} \quad \cdots (5)$$

$$\begin{cases} \begin{pmatrix} L_d \\ M_d \\ S_d \end{pmatrix} = \begin{pmatrix} 1 & 0 & 0 \\ 0.82781 & 0 & 0.17216 \\ 0 & 0 & 1 \end{pmatrix} \begin{pmatrix} L \\ M \\ S \end{pmatrix} & if\ S \le L \\ \\ \begin{pmatrix} L_d \\ M_d \\ S_d \end{pmatrix} = \begin{pmatrix} 1 & 0 & 0 \\ 0.81951 & 0 & 0.18046 \\ 0 & 0 & 1 \end{pmatrix} \begin{pmatrix} L \\ M \\ S \end{pmatrix} & if\ S > L \end{cases} \quad \cdots (6)$$

Then, the evaluation result output unit 16 converts the document data in the LMS color space which is perceivable by colorblind people with P type color vision into image data in an RGB color space which is perceivable by colorblind people with P type color vision. In addition, the evaluation result output unit 16 converts document data in the LMS color space which is perceivable by colorblind people with D type color vision into image data in an RGB color space which is perceivable by colorblind people with D type color vision. Here, the conversion from the LMS color space to the RGB color spaces may be performed using known methods.

Next, the evaluation result output unit 16 extracts combinations of two adjacent colors from the document data in the color spaces as RGB color spaces which are perceivable by people with color blindness.

Specifically, the evaluation result output unit 16 searches for combinations of two overlapping objects having different colors from each other in the document data in the color spaces which are perceivable by people with color blindness, using information indicating the position of each object. Then, the evaluation result output unit 16 extracts combinations of two colors within the combinations of two adjacent or overlapping objects having different colors from each other as combinations of two adjacent colors. Note that in the case that an object contains multiple colors, each portion having each of the colors is considered an object, and each two color combination of such portions is a combination of two adjacent colors.

Here, the evaluation result output unit 16 extracts combinations of two adjacent colors for each of the document data in the color space which is perceivable by colorblind people with P type color vision and the document data in the color space in the color space which is perceivable by colorblind people with D type color vision. Multiple combinations of two adjacent colors may be extracted from each type of document data.

Next, the evaluation result output unit 16 determines whether each of the combinations extracted in the manner described above is a combination is that which people with color blindness may easily confuse the two colors therein. Specifically, the evaluation result output unit 16 determines whether each combination is that which people with color blindness may easily confuse the two colors therein, based on the difference in brightness of the two colors which are perceived by people with color blindness.

The evaluation result output unit 16, for example, converts the RGB values of each of the two colors which are perceived by people with color blindness to L*a*b* values for each combination. The conversion from RGB values to L*a*b* values may be performed using known methods.

If the difference in the L* value, which is the difference in brightness between the two colors, is less than a predetermined threshold value, the evaluation result output unit 16 determines that the combination of the two colors is that which people with color blindness may easily confuse the two colors therein.

Here, the evaluation result output unit 16 determines whether each combination in the document data in the color space which is perceivable to colorblind people with P type color vision and the document data in the color space which is perceivable to colorblind people with D type color vision is a combination which colorblind people of each type of color vision may easily confuse the two colors therein.

Next, the evaluation result output unit 16 determines a proposed change for one of the colors of a combination of the two colors which is judged to be that which may be easily confused by people with color blindness, such that people with color blindness would be able to distinguish the two colors, and the change in at least one of the two colors is minimal for people with normal color vision.

Here, the L*a*b* values of the two colors which are perceived by people with normal color vision corresponding to the two colors of a combination which may be easily confused by people with color blindness are designated as $[L1\_n, a1\_n, b1\_n]$ and $[L2\_n, a2\_n, b2\_n]$, respectively. Between these, the color represented by $[L2\_n, a2\_n, b2\_n]$ is the target of change.

In addition, the L*a*b* values of the two colors above which are perceived by colorblind people with P type color vision are designated as $[L1\_p, a1\_p, b1\_p]$ and $[L2\_p, a2\_p, b2\_p]$, respectively. Further, the L*a*b* values of the two colors above which are perceived by colorblind people with D type color vision are designated as $[L1\_d, a1\_d, b1\_d]$ and $[L2\_d, a2\_d, b2\_d]$, respectively.

The evaluation result output unit 16 obtains $[L3\_n, a3\_n, b3\_n]$, which are the L*a*b* values of the color which is perceived by people with normal color vision after the color is changed, by solving a constrained optimization problem that minimizes the evaluation function J shown in Formula (7) below.

$$min \ J(L3\_n, a3\_n, b3\_n) = \sqrt{(a2\_n - a3\_n)^2 + (b2\_n - b3\_n)^2}$$
$$s.t.$$
$$const < |L1\_p - L3\_p|$$
$$const < |L1\_d - L3\_d| \qquad \cdots (7)$$
$$[L3\_n, a3\_n, b3\_n] \in RGB \text{ color space}$$

Here, min J (x) = f (x) is an equation that represents an optimization problem for obtaining a vector x that minimizes the evaluation function J. In addition, s. t. represents constraining conditions with respect to variables with respect to the evaluation function J.

The first line in Formula (7) means that a color with the smallest color difference for people with normal color vision from the color before the change is to be obtained as the color after the change.

In addition, const in Formula (7) is a preset threshold value for a difference in brightness at which people with color blindness can distinguish between two colors. L3_p and L3_d in Formula (7) are the L* values of the colors, which are respectively perceived by colorblind people with P type and D type color vision, for the colors $[L3\_n, a3\_n, b3\_n]$ described above.

The condition at the bottom line in Formula (7) is a condition that means that the L*a*b* value correspond to those which can be expressed in the RGB color space.

In the case that there are multiple solutions to the constrained optimization problem of Formula (7), the evaluation result output unit 16 selects the color with the smallest difference in brightness from the color to be changed as the color of the proposed change. That is, the evaluation result output unit 16 selects the color with the minimum value of I L2_n-L3_n I as the color of the proposed change.

The following is a specific example of how to solve the constrained optimization problem of Formula (7).

First, the L*a*b* color space which is perceived by people with normal color vision is quantized at predetermined intervals, and all L*a*b* values are compiled in a list.

Next, each of the L*a*b* values which are perceived by people with normal color vision in the above list is converted into L*a*b values which are perceived by colorblind people with P type color vision, and each of the converted L*a*b* values is correlated and saved with each of the L*a*b* values which are perceived by people with normal color vision. In addition, each of the L*a*b* values which are perceived by people with normal color vision in the above list is converted into L*a*b* values which are perceived by colorblind people with D type color vision, and each of the converted L*a*b* values is correlated and saved with each of the L*a*b* values which are perceived by people with normal color vision.

Here, conversion of the L*a*b* values each of the L*a*b* values which are perceived by people with normal color vision to the L*a*b* values which are perceived by colorblind people with P type color vision, and conversion of the L*a*b* values each of the L*a*b* values which are perceived by people with normal color vision to the L*a*b* values which are perceived by colorblind people with D type color vision may be performed employing known methods.

For example, in the case that the L*a*b* values which are perceived by people with normal color vision are converted to the L*a*b* values which are perceived by colorblind people with P type color vision, first, the L*a*b* values which are perceived by people with normal color vision are converted to RGB values which are perceived by people with normal color vision. Next, the RGB values which are perceived by people with normal color vision are converted to RGB values which are perceived by colorblind people with P type color vision. This conversion may be performed by the method described above. Next, the RGB values which are perceived by colorblind people with P type color vision are converted to L*a*b* values which are perceived by colorblind people with P type color vision. The conversion from RGB values to L*a*b* values may be performed by employing known methods.

The conversion from L*a*b* values which are perceived by people with normal color vision to L*a*b* values which are perceived by colorblind people with D type color vision can be performed in the same manner as the conversion to L*a*b* values which are perceived by colorblind people with P type color vision described above.

Next, each of the L*a*b* value which are perceived by people with normal color vision that correspond to each of the L*a*b* values, the difference in brightness (L* value) of which is less than const in Formula (7) for [L1_p, a1_p, b1_p] in the list of L*a*b* values which are perceived by colorblind people with P type color vision described above, is deleted from the list of L*a*b* values which are perceived by people with normal color vision. In addition, each of the L*a*b* values each of the L*a*b* value which are perceived by people with normal color vision that correspond to each of the L*a*b* values, the difference in brightness (L* value) of which is less than const in Formula (7) for [L1_d, a1_d, b1_d] of each L*a*b* value which are perceived by colorblind people with D type color vision described above, is deleted from the list of L*a*b* values which are perceived by users having normal color vision.

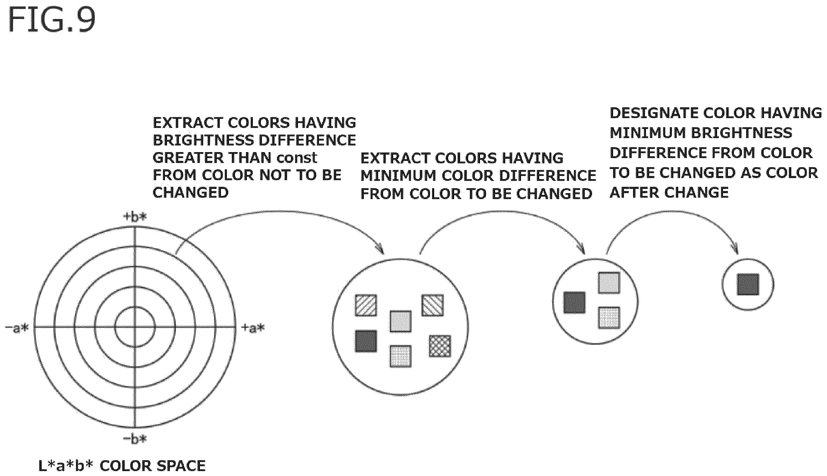

The procedure above leaves L*a*b* values of multiple colors whose brightness difference is greater than const with respect to [L1_n, a1_n, b1_n], which are the L*a*b* values of the color that is not the target of change, in the list of L*a*b* values which are perceived by people with normal color vision described above. That is, multiple colors, of which the brightness difference from the color that is not a target of change is greater than const, are extracted from the L*a*b* color space which is perceived by people with normal color vision, as illustrated in Figure 9.

Next, L*a*b* values having the shortest distance from [L2_n, a2_n, b2_n], which are the L*a*b* values of the color to be changed on an a*b* plane are selected from among the L*a*b* values that remain in the list of L*a*b* values which are perceived by people with normal color vision, and are L*a*b* values of colors that can be expressed in an RGB color space,.

Thereby, the color that can be expressed in the RGB color space and has the smallest color difference from the color to be changed is extracted from each color extracted as the color with a brightness difference greater than const from the color which is not to be changed, as illustrated in Figure 9. The color with the smallest color difference from the color to be changed refers to a color with the smallest degree of color change from the color to be changed as perceived by people with normal color vision.

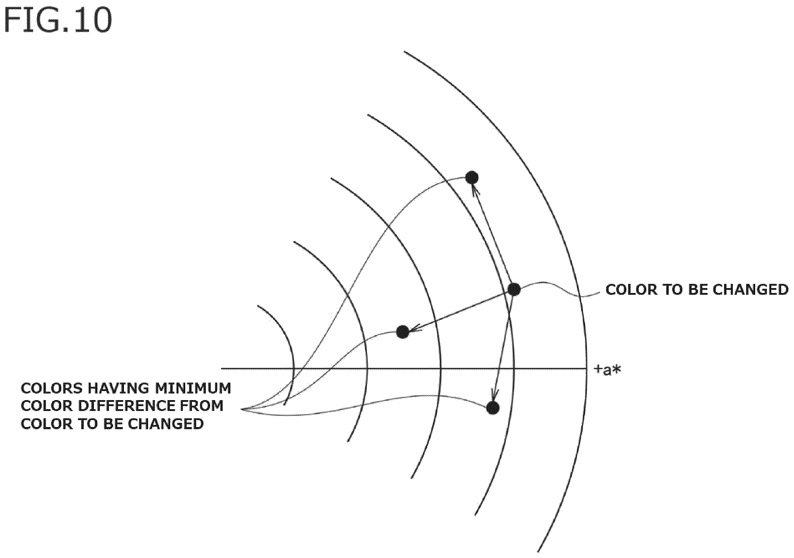

Here, there may be multiple colors with the smallest color difference (distance on the a*b* plane) from the color to be changed, as illustrated in Figure 10. In the case that multiple colors with the smallest color difference from the color to be changed exist, that is, when multiple solutions exist for the constrained optimization problem of Formula (7), the color with the smallest brightness difference from the color to be changed is selected as the color of the proposed change.

The evaluation result output unit 16 determines the proposed change of one color by solving the constrained optimization problem of Formula (7) as described above for all combinations of two colors in which at least one of colorblind people with P type color vision and colorblind people with D type color vision is likely to confuse the two colors.

After the colors of the proposed changes are determined, the evaluation result output unit 16 transmits the proposed changes to the terminal device 20. Thereby, it becomes possible for the terminal device 20 to notify a user by displaying the proposed change of one of the colors in the combinations of two colors in which people with color blindness are likely to confuse the two colors on the display 23.

The present invention is not limited to the above embodiments, and may be embodied by modifying the constituent elements to an extent that it does not depart from the spirit and scope thereof at the implementation stage.

In addition, various inventions may be realized by appropriate combinations of the plurality of constituent elements disclosed in the above embodiments. For example, all of the constituent elements disclosed in the embodiments may be combined as appropriate. It is, of course, possible for various modifications and applications to be realized within a scope that does not depart from the spirit and the scope of the present invention.

The additional items below are further disclosed with respect to the present invention.

(Item 1)

The document evaluation apparatus of the present invention is equipped with: a document data acquisition unit that acquires document data including at least text objects; a preliminary processing unit that performs a preliminary process on the document data acquired by the document data acquisition unit; an information volume evaluation unit that evaluates an amount of information in the document data based on the preliminarily processed document data; a character evaluation unit that evaluates the legibility of text based on the preliminarily processed document data; and a color evaluation unit that evaluates the relationships among adjacent colors in the document data based on the preliminarily processed document data.

(Item 2)

In the document evaluation apparatus of Item 1, the preliminary processing unit may perform a process that removes objects which are not subjects of evaluation from the document data as the preliminary process.

(Item 3)

The document evaluation apparatus of Item 1 or 2 may be equipped with an evaluation result output unit that outputs the evaluation results of the information volume evaluation unit, the character evaluation unit, and the color evaluation unit.

(Item 4)

In the document evaluation apparatus of any of Items 1 through 3, the document data may include vector graphic objects and bitmap image objects.

(Item 5)

In the document evaluation apparatus of any of Items 1 through 4, the document data may include font information of text.

(Item 6)

In the document evaluation apparatus of Item 3, the evaluation result output unit may output information indicating locations of targets of alert in the document data, as evaluation results.

(Item 7)

In the document evaluation apparatus of Item 6, in the case that the document data includes page rotation information, the evaluation result output unit may administer a coordinate transformation process according to the page rotation to the information that indicates the locations of the targets of alert in the document data.

(Item 8)

The document evaluation system of the present invention is equipped with a document evaluation apparatus of any of Items 1 through 7, and a terminal device that displays the evaluation results obtained by the document evaluation apparatus.

(Item 9)

A method of evaluating a document of the present invention acquires document data that contains at least text objects, performs a preliminary process on the acquired document data, evaluates the amount of information in the document data based on the preliminarily processed document data, evaluates the legibility of text based on the preliminarily processed document data, and evaluates the relationship between adjacent colors in the document data based on the preliminarily processed document data.

(Item 10)

A document evaluation program of the present invention causes a computer to execute the steps of: acquiring document data including at least text objects; performing preliminary process on the acquired document data; evaluating the amount of information in the document data based on the preliminarily processed document data; evaluating the legibility of text based on the preliminarily processed document data; and evaluating the relationship between adjacent colors in the document data based on the preliminarily processed document data.

[Explanation of the Reference Numerals]

    1 Document evaluation system
    10 Document evaluation apparatus
    11 Document data acquisition unit
    12 Preliminary processing unit
    13 Information volume evaluation unit
    14 Character evaluation unit
    15 Color evaluation unit
    16 Evaluation result output unit
    20 Terminal device
    21 Control unit
    22 Input unit
    23 Display

**Claims**

1. A document evaluation apparatus (1), comprising:

   a document data acquisition unit (11) that acquires document data including at least text objects;
   a preliminary processing unit (12) that performs a preliminary process on the document data acquired by the document data acquisition unit (11);
   an information volume evaluation unit (13) that evaluates an amount of information in the document data based on the preliminarily processed document data;
   a character evaluation unit (14) that evaluates the legibility of text based on the preliminarily processed document data; and
   a color evaluation unit (15) that evaluates the relationships among adjacent colors in the document data based on the preliminarily processed document data.

2. The document evaluation apparatus of Claim 1, wherein:
   the preliminary processing unit (12) performs a process that removes objects which are not subjects of evaluation from the document data as the preliminary process.

3. The document evaluation apparatus of Claim 1, further comprising:
   an evaluation result output unit (16) that outputs the evaluation results of the information volume evaluation unit (13), the character evaluation unit (14), and the color evaluation unit (15).

4. The document evaluation apparatus of Claim 1, wherein:
   the document data may include vector graphic objects and bitmap image objects.

5. The document evaluation apparatus of Claim 1, wherein:
   the document data includes font information of text.

6. The document evaluation apparatus of Claim 3, wherein:
the evaluation result output unit (16) outputs information indicating locations of targets of alert in the document data, as evaluation results.

7. The document evaluation apparatus of Claim 6, wherein:
in the case that the document data includes page rotation information, the evaluation result output unit (16) administers a coordinate transformation process according to the page rotation to the information that indicates the locations of the targets of alert in the document data.

8. A document evaluation system, comprising:

    the document evaluation apparatus of any of Claims 1 through 7, and
    a terminal device that displays the evaluation results obtained by the document evaluation apparatus.

9. A method for evaluating a document, comprising:

    acquiring document data that contains at least text objects;
    performing a preliminary process on the acquired document data;
    evaluating the amount of information in the document data based on the preliminarily processed document data;
    evaluating the legibility of text based on the preliminarily processed document data; and
    evaluating the relationship between adjacent colors in the document data based on the preliminarily processed document data.

10. A document evaluation program that causes a computer to execute the steps of:

    acquiring document data including at least text objects;
    performing preliminary process on the acquired document data;
    evaluating the amount of information in the document data based on the preliminarily processed document data;
    evaluating the legibility of text based on the preliminarily processed document data; and
    evaluating the relationship between adjacent colors in the document data based on the preliminarily processed document data.

# FIG.1

<u>1</u>

10

### DOCUMENT EVALUATION APPARATUS

11 — DOCUMENT DATA ACQUISITION UNIT

12 — PRELIMINARY PROCESSING UNIT

13 — INFORMATION VOLUME EVALUATION UNIT

14 — CHARACTER EVALUATION UNIT

15 — COLOR EVALUATION UNIT

16 — EVALUATION RESULT OUTPUT UNIT

20

### TERMINAL DEVICE

CONTROL UNIT — 21

INPUT UNIT — 22

DISPLAY UNIT — 23

# FIG.2A

| (YELLOW)

| | | | | | I V |
| BLUE | WHITE | RED |

# FIG.2B

|     | R   | G   | B   | COLOR  |
| --- | --- | --- | --- | ------ |
| I   | 255 | 255 | 0   | YELLOW |
| II  | 0   | 35  | 149 | BLUE   |
| III | 255 | 255 | 255 | WHITE  |
| IV  | 237 | 41  | 57  | RED    |

FIG.2C

| | COLOR 1 | | | | COLOR 2 | | | |
|---|---|---|---|---|---|---|---|---|
| | R | G | B | COLOR | R | G | B | COLOR |
| ⅠとⅡ | 255 | 255 | 0 | YELLOW | 0 | 35 | 149 | BLUE |
| ⅠとⅢ | 255 | 255 | 0 | YELLOW | 255 | 255 | 255 | WHITE |
| ⅠとⅣ | 255 | 255 | 0 | YELLOW | 237 | 41 | 57 | RED |
| ⅡとⅢ | 0 | 35 | 149 | BLUE | 255 | 255 | 255 | WHITE |
| ⅢとⅣ | 255 | 255 | 255 | WHITE | 237 | 41 | 57 | RED |

# FIG.3

C1  C2

AMOUNT OF INFORMATION

TYPOGRAPHY

COLOR DESIGN

OUTPUT ALL REPORT

情報量テスト Rev2 19%

EVALUATION RESULTS FOR AMOUNT OF INFORMATION

The amount of information on this page exceeds the reference value

| | |
|---|---|
| Black Dot Ratio (reference value: <19%) | 19.52% |
| White Dot Ratio | 80.47% |
| Number of Black Dots | 49665 |
| Number of White Dots | 204735 |
| Total Number of Dots | 254400 |

DISPLAY REPORT

1  2

EP 4 524 911 A1

# FIG.4

T1

T2

EP 4 524 911 A1

| AMOUNT OF INFORMATION |
|---|
| TYPOGRAPHY |
| COLOR DESIGN |
| OUTPUT ALL REPORT |

可読性網羅テスト Rev2

●文字サイズ：6pt、文字変形なし

①行間 1 行（固定値：6pt）、1 行の文字数：45 文字

②行間 1.5 行（固定値：9pt）、1 行の文字数：45 文字

③行間 1 行（固定値：6pt）、1 行の文字数：46 文字

④行間 1.5 行（固定値：9pt）、1 行の文字数：46 文字

⑤行間 1 行（固定値：6pt）、1 行の文字数：47 文字

⑥行間 1.5 行（固定値：9pt）、1 行の文字数：47 文字

1

2

## EVALUATION RESULTS FOR TYPOGRAPHY

546 items outside reference ranges were detected

| ABC | Character size too small 42 spots |
|---|---|
| ABC / ABC | Line spacing too narrow 18 spots |
| ABC | Number of characters per line outside of reference range 24 spots |
| △ | Characters deformed 462 spots |

DISPLAY REPORT

# FIG.5

EP 4 524 911 A1

FIG.6

| RESULTS OF COLOR APPEARANCE SIMULATION |
| --- |

☑ P type  ☑ Original  ☑ D type  ☐ Elderly

**FIG.7**

FIG.8A

あいうえお　アイウエオ　アイウエオ　発明　L2 L1

FIG.8B

Typography Abcdefghijklmnopqrstuvwxyz

L2
L4
L1
L3

# FIG.9

EXTRACT COLORS HAVING
BRIGHTNESS DIFFERENCE
GREATER THAN const
FROM COLOR NOT TO BE
CHANGED

EXTRACT COLORS HAVING
MINIMUM COLOR DIFFERENCE
FROM COLOR TO BE CHANGED

DESIGNATE COLOR HAVING
MINIMUM BRIGHTNESS
DIFFERENCE FROM COLOR
TO BE CHANGED AS COLOR
AFTER CHANGE

L*a*b* COLOR SPACE

# FIG.10

COLOR TO BE CHANGED

+a*

COLORS HAVING MINIMUM COLOR DIFFERENCE FROM COLOR TO BE CHANGED

Europäisches
Patentamt

European
Patent Office

Office européen
des brevets

# EUROPEAN SEARCH REPORT

Application Number

EP 24 19 9661

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/041618 A1 (HARRINGTON STEVEN J [US] ET AL) 22 February 2007 (2007-02-22) * figure 1 * * figures 58-94 * | 1-10 | INV. G06V30/12 G06V30/162 G06V30/18 G06V30/244 |
| A | RELLO LUZ LUZRELLO@GMAIL COM ET AL: "Make It Big! The Effect of Font Size and Line Spacing on Online Readability", USER INTERFACE SOFTWARE AND TECHNOLOGY, ACM, 2 PENN PLAZA, SUITE 701 NEW YORK NY 10121-0701 USA, 7 May 2016 (2016-05-07), pages 3637-3648, XP058517662, DOI: 10.1145/2858036.2858204 ISBN: 978-1-4503-4531-6 * the whole document * | 1-10 | |
| A | SOFIE BEIER ET AL: "Readability Research: An Interdisciplinary Approach", ARXIV.ORG, CORNELL UNIVERSITY LIBRARY, 201 OLIN LIBRARY CORNELL UNIVERSITY ITHACA, NY 14853, 20 July 2021 (2021-07-20), XP091014285, * the whole document * | 1-10 | TECHNICAL FIELDS SEARCHED (IPC) G06V |
| A | US 2011/222134 A1 (KODAIRA NAOAKI [JP]) 15 September 2011 (2011-09-15) * figures 18-20 * | 1-10 | |

The present search report has been drawn up for all claims

| Place of search | Date of completion of the search | Examiner |
|---|---|---|
| The Hague | 17 January 2025 | Martinière, Anthony |

EPO FORM 1503 03.82 (P04C01)

## ANNEX TO THE EUROPEAN SEARCH REPORT
## ON EUROPEAN PATENT APPLICATION NO.

EP 24 19 9661

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2025

| Patent document cited in search report | Publication date | Patent family member(s) | | Publication date |
|---|---|---|---|---|
| US 2007041618 A1 | 22-02-2007 | EP | 1503336 A2 | 02-02-2005 |
| | | EP | 1503337 A2 | 02-02-2005 |
| | | EP | 1503338 A2 | 02-02-2005 |
| | | EP | 1503339 A2 | 02-02-2005 |
| | | EP | 1503340 A2 | 02-02-2005 |
| | | EP | 1503341 A2 | 02-02-2005 |
| | | EP | 1503342 A2 | 02-02-2005 |
| | | JP | 4558403 B2 | 06-10-2010 |
| | | JP | 4558404 B2 | 06-10-2010 |
| | | JP | 4619719 B2 | 26-01-2011 |
| | | JP | 4619720 B2 | 26-01-2011 |
| | | JP | 4619721 B2 | 26-01-2011 |
| | | JP | 4624026 B2 | 02-02-2011 |
| | | JP | 4624027 B2 | 02-02-2011 |
| | | JP | 2005050351 A | 24-02-2005 |
| | | JP | 2005050352 A | 24-02-2005 |
| | | JP | 2005050353 A | 24-02-2005 |
| | | JP | 2005050354 A | 24-02-2005 |
| | | JP | 2005050355 A | 24-02-2005 |
| | | JP | 2005050356 A | 24-02-2005 |
| | | JP | 2005050357 A | 24-02-2005 |
| | | US | 2005028074 A1 | 03-02-2005 |
| | | US | 2005028075 A1 | 03-02-2005 |
| | | US | 2005028076 A1 | 03-02-2005 |
| | | US | 2005028096 A1 | 03-02-2005 |
| | | US | 2005028097 A1 | 03-02-2005 |
| | | US | 2005028098 A1 | 03-02-2005 |
| | | US | 2005028099 A1 | 03-02-2005 |
| | | US | 2006029258 A1 | 09-02-2006 |
| | | US | 2006029259 A1 | 09-02-2006 |
| | | US | 2006029260 A1 | 09-02-2006 |
| | | US | 2006039585 A1 | 23-02-2006 |
| | | US | 2007036390 A1 | 15-02-2007 |
| | | US | 2007036391 A1 | 15-02-2007 |
| | | US | 2007036392 A1 | 15-02-2007 |
| | | US | 2007036393 A1 | 15-02-2007 |
| | | US | 2007036394 A1 | 15-02-2007 |
| | | US | 2007041617 A1 | 22-02-2007 |
| | | US | 2007041618 A1 | 22-02-2007 |
| | | US | 2007041619 A1 | 22-02-2007 |
| US 2011222134 A1 | 15-09-2011 | CN | 102194116 A | 21-09-2011 |
| | | JP | 4792117 B2 | 12-10-2011 |
| | | JP | 2011193294 A | 29-09-2011 |
| | | US | 2011222134 A1 | 15-09-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011020387 A

**Non-patent literature cited in the description**

- **UNIVERSAL COMMUNICATION DESIGN ASSO- CIATION**. *9 Items for Ease of Understanding*, https://ucda.jp/ninsho_mokuteki/kijun.html#01